Europäisches Patentamt

(19) European Patent Office

Office européen des brevets

(11) Publication number: **0 040 537**
**B1**

(12) # EUROPEAN PATENT SPECIFICATION

(45) Date of publication of patent specification: **15.04.87**

(21) Application number: **81302201.9**

(22) Date of filing: **18.05.81**

(51) Int. Cl.⁴: **C 08 L 27/12,** C 08 L 27/16,
C 08 L 27/18, H 01 B 1/24,
H 05 B 3/14, H 01 C 7/02,
H 05 B 3/10

(54) PTC conductive polymer compositions and devices comprising them and a method of making them.

(30) Priority: **19.05.80 US 150910**
**19.05.80 US 150911**
**19.05.80 PCt/us80/00592**

(43) Date of publication of application:
**25.11.81 Bulletin 81/47**

(45) Publication of the grant of the patent:
**15.04.87 Bulletin 87/16**

(84) Designated Contracting States:
**AT BE CH DE FR IT LI NL SE**

(56) References cited:
EP-A-0 008 235
DE-A-2 755 076
DE-A-2 755 077
DE-A-2 821 799
DE-A-2 937 708
FR-A-2 321 751
GB-A-1 338 953
US-A-3 793 716
US-A-3 823 217
US-A-3 861 029
US-A-3 914 363

(73) Proprietor: **RAYCHEM CORPORATION**
**300 Constitution Drive**
**Menlo Park California 94025 (US)**

(72) Inventor: **Sopory, Umesh Kumar**
**2448 Renfield Way**
**San Jose, CA 95148 (US)**

(74) Representative: **Jay, Anthony William et al**
**Raychem Limited Intellectual Property Law**
**Department Faraday Road**
**Dorcan Swindon SN3 5HH Wiltshire (GB)**

(56) References cited:
US-A-3 951 871
US-A-4 177 376
US-A-4 188 276
US-A-4 242 573

# 0 040 537

## Description

This invention relates to the PTC conductive polymer compositions and electrical devices containing them, especially self-limiting heaters.

PTC conductive polymer compositions are known for use in self-limiting heaters and in other electrical devices. Reference may be made, for example to U.S. Patents Nos. 3,793,716, 3,823,217, 3,861,029, 3,914,363, 4,177,376 and German OLS Nos. 2,755,076, 2,755,077, 2,821,799, 2,948,281, 2,949,173 and 3,002,721. For details of more recent developments, reference may be made to the applications corresponding to U.S. Serial Nos. 41,071, 67,207, 88,304, 97,711, 141,984, 141,987, 141,988, 141,989, 141,990, 141,991, 142,053 and 142,054.

The known PTC conductive polymer compositions are not satisfactory for use in situations in which they may be externally heated to temperatures substantially higher than the temperatures which they reach during their normal use. For example the known self-limiting strip heaters are unsatisfactory for heating pipes which are periodically subjected to steam cleaning, because they increase rapidly in resistance when subjected to the elevated temperatures employed during such steam-cleaning. The present invention provides improved PTC compositions which increase relatively slowly in resistivity when exposed to elevated temperatures.

In one apsect, the present invention provides a conductive polymer composition
(1) which exhibits PTC behaviour;
(2) which comprises
(a) a polymer component which comprises a mixture of a first crystalline, fluorinated polymer having a first melting point, $T_1$, and a second crystalline, fluorinated polymer having a second melting point, $T_2$, which is at least 160°C and at least $(T_1+25)$°C, and
(b) a particulate filler component which has been dispersed in said polymer component and which comprises a conductive filler; and
(3) which, after being subjected to a heat treatment in which the composition is maintained at a temperature of 150°C for 1000 hours, has a resistivity at 25°C, $p_{1000}$, which is less than $2 \times p_o$, where $p_o$ is the resistivity of the composition at 25°C prior to said heat treatment.

$T_2$ is preferably at least $(T_1+50)$°C, particularly at least $(T_1+70)$°C, especially at least $(T_1+90)$°C. $T_2$ is preferably at least 200°C, especially at least 230°C. The polymer component generally comprises a physical mixture of two distinct polymers, but may comprise more than two polymers or may be a single polymer, e.g. a block copolymer, having distinct segments such that the polymer has two distinct melting points. The melting points referred to are the peak values of the peaks of a DSC (differential scanning calorimeter) curve. $T_1$ is selected for the desired switching temperature $(T_s)$ of the composition, and may be for example 100° to 175°C. As examples of fluorinated polymers that may be used, the lower melting polymer may be polyvinylidene fluoride and the higher melting polymer an ethylene/tetrafluoroethylene polymer. Each of the polymers is crystalline, and this term is used herein to mean that the polymer has a crystallinity of at least 1%, preferably at least 5%, particularly at least 10%, especially at least 20%, as measured by X-ray diffraction. The polymer component can also contain other polymers, e.g. elastomers, preferably in amounts which do not substantially affect the electrical characteristics of the composition, usually less than 25%, preferably less than 15%, especially less than 10%, by weight of the polymer component.

The ratio by weight of the first polymer to the second polymer is preferably from 1:3 to 3:1, particularly from 1:2 to 2:1, especially from 0.5:1 to 1:1, more especially from 0.6:1 to 0.8:1. The first and second polymers are generally incompatible with each other.

The conductive filler will often consist of or contain one or more carbon blacks, though other conductive fillers can be used. The amount of conductive filler will be selected with a view to the required resistivity after any annealing which is carried out, e.g. $10^2$ to $10^5$ ohm.cm at 25°C for a heater. When using a carbon black as the conductive filler, the amount thereof may be for example 8 to 40% by weight of the composition, e.g. 10 to 15%, with the polymer component providing 50 to 85% by weight of the composition.

The particulate filler component may in addition contain a non-conductive filler, e.g. in amount 10 to 25% by weight of the composition.

The compositions can be processed into strip heaters and other devices by methods known in the art, and for this purpose are preferably melt-shapeable. Such devices generally contain two or more electrodes which can be connected to a power supply and which, when so connected, cause current to flow through the PTC element. Such devices form part of the present invention. In a particularly preferred device according to the invention, the second polymeric component comprises a polymeric component which consists essentially of at least one polymer having a melting point of $(T_1-10)$°C to $(T_1, +50)$°C. The electrode(s) may be in physical contact with the PTC element or separated therefrom by electrically conductive material, e.g. another conductive polymer. Especially since the second polymer has a melting point greater than 160°C, melt-shaping of the compositions may be facilitated by including a suitable processing aid in the composition. After shaping, the composition can if desired be cross-linked, although this is not generally preferred.

It is often desirable to anneal the compositions, after they have been shaped, in order to reduce their resistivity. We have discovered that improved products are obtained if annealing is carried out at a

2

temperature $T_A$ which is between $T_1$ and $T_2$, usually closer to $T_1$ than to $T_2$, preferably between $(T_1+5)°C$ and $(T_2-10)°C$, especially between $(T_1+10)°C$ and $(T_2-40)°C$, particularly between $(T_1+10)°$ and $(T_2-75)°C$, for a time sufficient to reduce the resistivity at 25°C of the PTC composition from a first value, $I_x$, prior to said annealing, to a second value, $I_o$, which is less than $0.8 \times I_x$, e.g. $0.1 \times I_x$ to $0.8 \times I_x$, preferably less than $0.6 \times I_x$, with $I_o$ preferably being from $10^2$ to $10^5$ ohm.cm. The annealing time will usually be at least 2 hours, e.g. 4 to 10 hours.

Although the compositions of the invention have substantially improved properties in many respects, they are relatively brittle compared to known PTC compositions. We have discovered that this disadvantage can be substantially mitigated by means of a layer of a second polymeric composition having substantially greater flexibility at 25°C than the PTC composition of the invention, the layer being adjacent to, and preferably surrounding, the PTC composition and being melt-fused thereto.

The second polymeric composition has greater flexibility than the PTC conductive polymer composition at room temperature (25°C), preferably at all temperatures between 0° and the higher of 100°C and the $T_s$ of the PTC composition, especially between $-20°C$ and the higher of 100°C and the $T_s$ of the PTC composition. The second polymeric composition and the thickness of the layer thereof should be such that it substantially enhances the flex life of the device in a flex test of the kind described below, and in its broadest sense the term "having greater flexibility" should be construed accordingly. Normally the layer will be of uniform composition, but the invention includes for example a first layer composed of a hot melt adhesive which is melt-bonded on one surface to the PTC element and on the other surface to a layer of another polymeric composition.

The second polymeric composition is often an electrical insulator and is preferably substantially free of (i.e. contains 0 to 10% by weight of) fillers and other additives. The second polymeric composition should be compatible with the PTC composition to ensure melt-fusion, and preferably the second polymeric composition comprises at least 50% by weight of units which are the same as units constituting at least 50% by weight of the polymer providing the continuous phase in the PTC element. Preferably the second polymeric composition contains at least 90% by weight of the polymer providing the continuous phase of the PTC element.

The present invention also provides a method of making devices according to the invention. Accordingly the present invention provides a method of making an electrical device according to the invention, which comprises (1) melt-extruding the second polymeric composition in contact with said PTC element, and (2) heating the device to effect melt fusion of the PTC element and the layer, the PTC element preferably being heated to a temperature between $(T_1+5)°C$ and $(T_1-40)°C$ for a time which is sufficient to reduce the resistivity at 25°C of the PTC composition from a first value $\rho_x$ prior to said annealing to a second value $\rho_o$ after said annealing, where $\rho_o$ is less than $0.8 \times \rho_x$.

The layer of the second polymeric composition is preferably melt-extruded around the PTC element, e.g. using a cross-head die. Thus in a preferred procedure, the PTC composition is melt-extruded around two (or more) electrodes, e.g. to provide the core for a self-limiting strip heater, and the layer of the second polymeric composition is applied thereto by simultaneous or subsequent melt extrusion, e.g. by coextrusion. The layer of the second polymeric composition need not be applied in a separate operation and the invention includes for example formation of the layer by appropriate adjustment of the extrusion conditions so that the PTC element is of non-uniform composition, with the outer layer having the desired characteristics.

When, as is preferred, the layer of the second polymeric composition is applied separately in a melt-extrusion operation, the extrusion conditions can be adjusted so that melt-fusion takes place essentially simultaneously with the extrusion, so that no separate heating step is required. In many cases, however, a separate heating step is more conveniently carried out. Especially is this so when it is desired to anneal the PTC composition to reduce its resistivity, in which case the annealing step is preferably carried out under conditions such that the desired melt fusion is effected at the same time.

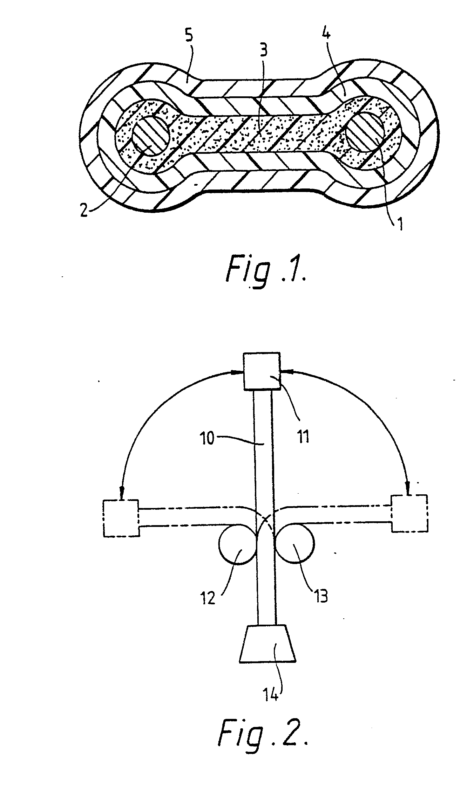

Referring now to Figure 1 of the drawings, wire electrodes 1 and 2 are embedded in PTC element 3, which is surrounded by, and melt-fused at the interface to, a layer of an insulating polymeric composition 4, which is itself surrounded by a further layer of another insulating composition 5. Referring now to Figure 2, strip heater 10 is secured at its upper end to a holder 11, and a weight of 1 lb. (0.45 kg) is secured to its lower end. The strip heater passes between and just contacts two fixed mandrels 12 and 13, each of 0.5 inch (1.27 cm) diameter. To determine the behavior of the strip heater on flexing, the holder is moved in the arc of a circle first to one side and then to the other, as shown by the dotted lines, at a rate of 40 cycles per minute. The number of cycles required to initiate and to complete breaking are determined.

The invention is illustrated by the following Example.

Example

The ingredients used in this Example are given in the Table below.

The ingredients for Composition A were dry-blended and the blend fed to a Werner Pfleiderer* ZSK extruder heated to about 260°C and fitted with a pelletizing die. The extrudate was chopped into pellets.

---

*Trade Mark

The ingredients for Composition B were dry-blended and the blend fed to a Werner-Pfleiderer ZSK extruder heated to 315—345°C and fitted with a pelletizing die. The extrudate was chopped into pellets.

Two parts by weight of the pellets of Composition B and one part by weight of the pellets of composition A were dry-blended together and then dried in air for about 16 hours at about 150°C. The dried blend was melt-extruded at 315—340°C through a single screw extruder fitted with a cross-head die around two pre-heated 18 AWG (0.127 cm. diameter) stranded nickel-coated copper wires whose centers were about 0.29 inch (0.74 cm) apart, to produce an extrudate having a cross-section of dumbbell shape as shown in Figure 1, the distance between the closest points of the electrodes being about 0.235 inch (0.6 cm) the thickness of the central section (t) being about 0.030 inch (0.076 cm) and the thickness of the end sections (d) being about 0.070 inch (0.18 cm). After the extrudate had cooled, two jackets were extruded around it, the inner jacket being 0.02 inch (0.051 cm) thick and composed of polyvinylidene fluoride having a melting point of about 156°C (Kynar* 460 from Pennwalt) and the outer being 0.025 inch (0.064 cm) thick and composed of a fluorinated ethylene/propylene copolymer having a melting point of about 247°C (Teflon* FEP 100 from du Pont). The jacketed strip was annealed at 175°C in air for 4 to 9 hours thus simultaneously reducing the resistivity of the PTC composition and melt-fusing the Teflon jacket to the PTC core. The product had a cross-section as shown in Figure 1.

TABLE

|  | Comp. A | | Comp. B | | Final Mix | |
| --- | --- | --- | --- | --- | --- | --- |
|  | Wt.% | Vol.% | Wt.% | Vol.% | Wt.% | Vol.% |
| Polyvinylidene fluoride having a melting point of about 160°C (Kynar* 451 from Pennwalt) | 88.0 | 89.2 |  |  | 29.3 | 32.0 |
| $CaCO_3$ (Omya* Bsh from Omya Inc.) | 3.0 | 2.0 |  |  | 1.0 | 0.7 |
| Carbon Black (Vulcan* XC-72 from Cabol, particle size 300 Angstroms, surface area, 254 $m^2$/g) | 9.0 | 8.8 |  |  | 3.0 | 3.2 |
| Ethylene/tetrafluoroethylene copolymer having a melting point of about 270°C (Tefzel* 2010) |  |  | 64.6 | 75.5 | 43.1 | 48.4 |
| Carbon Black (Continex* HAF from Continental Carbon, particle size 290 Angstroms, surface area 80 $m^2$/g) |  |  | 15.0 | 16.5 | 10.0 | 10.6 |
| ZnO (Kadox* 515 from Gulf and Western) |  |  | 20.0 | 7.2 | 13.3 | 4.5 |
| Processing aid |  |  | 0.4 | 0.8 | 0.3 | 0.6 |

*Trade Mark

## Claims

1. A conductive polymer composition
(1) which exhibits PTC behaviour;
(2) which comprises
(a) a polymer component which comprises a mixture of a first crystalline fluorinated polymer having a first melting point, $T_1$, and a second crystalline fluorinated polymer having a second melting point, $T_2$, which is at least 160°C and at least $(T_1+25)$°C, preferably at least $(T_1+70)$°C, and
(b) a particulate filler component which has been dispersed in said polymer component and which comprises a conductive filler; and
(3) which, after being subjected to a heat treatment in which the composition is maintained at a temperature of 150°C for 1000 hours, has a resistivity at 25°C, $\rho_{1000}$, which is less than $2 \times \rho_o$, where $\rho_o$ is the resistivity of the composition at 25°C prior to said heat treatment.

2. A composition according to Claim 1, wherein said first and second crystalline polymers constitute at least 75% by weight of the polymer component, the ratio by weight of the first polymer to the second polymer is from 1:3 to 3:1 and the conductive filler consists essentially of carbon black.

3. A composition according to Claim 1 or 2, wherein $T_2$ is at least 200°C, and $T_1$ is 100°C to 175°C.

4. A composition according to Claim 1, 2 or 3, wherein the first fluorinated crystalline polymer is polyvinylidene fluoride, and the second fluorinated crystalline polymer is an ethylene/tetrafluoroethylene copolymer.

5. An electrical device which comprises a PTC element composed of a PTC conductive polymer composition as claimed in any one of Claims 1 to 4 and two electrodes which can be connected to a source of electrical power and which when so connected cause current to flow through the PTC element.

6. A device according to Claim 5, which is a flexible self-limiting electrical heating strip and in which the PTC conductive polymer composition has a resistivity at 25°C of $10^2$ to $10^5$ ohm.cm and comprises

(i) 50 to 80%, by weight of the composition, of a polymer component which comprises a mixture of a first crystalline fluorinated polymer having a first melting point, $T_1$, which is from 100°C to 175°C and a second crystalline fluorinated polymer having a second melting point, $T_2$, which is at least 200°C, the ratio by weight of said first polymer to said second polymer being from 0.5:1 to 1:1, and

(ii) a particulate filler component which has been dispersed in said polymer component and which comprises carbon black in amount 8 to 40% by weight of the composition.

7. A method of making an electrical device according to Claim 5 or 6, which comprises annealing the device at a temperature $T_A$ which is between $(T_1+5)$°C and $(T_2-10)$°C, for a time which is sufficient to reduce the resistivity at 25°C of the PTC composition from a first value $\rho_x$ prior to said annealing to a second value $\rho_o$ after said annealing, where $\rho_o$ is less than $0.8 \times \rho_x$.

8. An electrical device according to Claim 5 or 6, which further comprises a layer of a second polymeric composition having substantially greater flexibility at 25°C than said PTC composition, said layer (1) being adjacent to said PTC element and (2) being melt-fused to said PTC element.

9. An electrical device according to Claim 8 wherein the second polymeric composition comprises a polymeric component which consists essentially of at least one polymer having a melting point of $(T_1-10)$°C to $(T_1+50)$°C.

10. A method of making an electrical device according to Claim 8 or 9 which comprises (1) melt-extruding the second polymeric composition in contact with said PTC element, and (2) heating the device to effect melt fusion of the PTC element and the layer, the PTC element preferably being heated to a temperature between $(T_1+5)$°C and $(T_2-40)$°C. for a time which is sufficient to reduce the resistivity at 25°C of the PTC composition from a first value $I_x$ prior to said annealing to a second value $I_o$ after said annealing, where $I_o$ is less than $0.8 \times I_x$.

**Patentansprüche**

1. Leitende Polymerzusammensetzung,
(1) die ein PTC-Verhalten hat;
(2) die aufweist
(a) eine polymere Komponente, die eine Mischung aus einem ersten kristallinen, fluorhaltigen Polymer, das einen ersten Schmelzpunkt $T_1$ hat, und einem zweiten kristallinen, fluorhaltigen Polymer aufweist, das einen zweiten schmelzpunkt $T_2$ hat, der wenigstens 160°C und wenigstens $(T_1+25)$°C, vorzugsweise wenigstens $(T_1+70)$°C beträgt, und
(b) eine feinteilige Füllstoffkomponente, die in der Polymerkomponente dispergiert ist und die einen leitenden Füllstoff aufweist; und
(3) die nach der Ausführung einer Wärmebehandlung, bei der die Zusammensetzung auf einer Temperatur von 150°C 1000 Stunden lang gehalten wird, einen spezifischen Widerstand bei 25°C von $\rho_{1000}$ hat, der kleiner als $2 \times \rho_0$ ist, wobei $\rho_0$ der spezifische Widerstand der Zusammensetzung bei 25°C vor dieser Wärmebehandlung ist.

2. Zusammensetzung nach Anspruch 1, bei der das erste und das zweite kristalline Polymer wenigstens 75 Gew-% der Polymerkomponente bilden, das Gewichtsverhältnis des ersten Polymers zweiten Polymer sich von 1:3 zu 3:1 beläuft und der leitende Füllstoff im wesentlichen aus Ruß besteht.

3. Zusammensetzung nach Anspruch 1 oder 2, bei der $T_2$ wenigstens 200°C und $T_1$ 100°C bis 175°C ist.

4. Zusammensetzung nach Anspruch 1, 2 oder 3, bei der das erste fluorhaltige kristalline Polymer Polyvinylidenfluorid und das zweite fluorhaltige kristalline Polymer ein Ethylen-Tetrafluorethylen-Copolymer ist.

5. Elektrische Vorrichtung, die ein PTC-Element aufweist, das aus einer leitenden PTC-Polymerzusammenzetzung nach einem der Ansprüche 1 bis 4 besteht, und die zwei Elektroden aufweist, die mit einer elektrischen Energiequelle verbunden werden können und die bei einer solchen Verbindung bewirken, daß Strom durch das PTC-Element fließt.

6. Vorrichtung nach Anspruch 5, die ein flexibles, selbst begrenzendes elektrisches Heizband ist, bei der die leitende PTC-Polymerzusammensetzung bei 25°C einen spezifischen Widerstand von $10^2$ bis $10^5$ Ohm.cm hat und die umfasst:
(i) 50 bis 80 Gew.-% der Zusammensetzung aus einer Polymerkomponente, die ein Gemisch aus einem ersten kristallinen fluorhaltigen Polymer, das einen ersten Schmelzpunkt $T_1$ hat, der zwischen 100°C und 175°C liegt, und einem zweiten kristallinen fluorhaltigen Polymer aufweist, das einen zweiten Schemlzpunkt $T_2$ hat, der wenigstens 200°C beträgt, wobei das Gewichtsverhältnis des ersten Polymers zum zweiten Polymer sich von 0,5:1 zu 1:1 beläuft, und
(ii) eine feinteilige Füllstoffkomponente, die in der Polymerkomponente dispergiert ist und die Ruß in einer Menge von 8 bis 40 Gew.-% der Zusammensetzung aufweist.

7. Verfahren zum Herstellen einer elektrischen Vorrichtung nach Anspruch 5 oder 6, bei dem die Vorrichtung bei einer Temperatur $T_A$ wärmebehandelt wird, die zwischen $(T_1+5)°C$ und $(T_2-10)°C$ liegt und zwar eine zeitlang, die ausreicht, um den spezifischen Widerstand der PTC-Zusammensetzung bei 25°C von einem ersten Wert $\rho_x$ vor der Wärmebehandlung auf einen zweiten Wert $\rho_0$ nach der Wärmebehandlung zu reduzieren, wobei $\rho_0$ kleiner als $0,8 \times \rho_x$ ist.

8. Elektrische Vorrichtung nach Anspruch 5 oder 6, die ferner eine Schicht aus einer zweiten polymeren Zusammensetzung aufweist, die eine wesentlich größere Fleixbilität bei 25°C als die PTC-Zusammensetzung hat, wobei die Schicht (1) sich in der Nähe des PTC-Elements befindet und (2) schmelzverbunden mit dem PTC-Element ist.

9. Elektrische Vorrichtung nach Anspruch 8, bei der die zweite polymere Zusammensetzung eine polymere Komponente aufweist, die im wesentlichen aus wenigstens einem Polymer besteht, das einen Schmelzpunkt von $(T_1-10)°C$ bis $(T_1+50)°C$ hat.

10. Verfahren zum Herstellen einer elektrischen Vorrichtung nach Anspruch 8 oder 9, das umfasst (1) Schmelzextrudieren der zweiten polymeren Zusammensetzung in Kontakt mit dem PTC-Element, und (2) Erwärmen der Vorrichtung, um eine Schmelzverbindung des PTC-Elements und der Schicht zu bewirken, wobei das PTC-Element vorzugsweise auf eine Temperatur zwischen $(T_1+5)°C$ und $(T_2-40)°C$ eine zeitlang erwärmt wird, die ausreicht, um den spezifischen Widerstand der PTC-Zusammensetzung bei 25°C von einem ersten Wert $\rho_x$ vor der Wärmebehandlung auf einen zweiten Wert $\rho_0$ nach der Wärmebehandlung zu reduzieren, wobei $\rho_0$ kleiner als $0,8 \times \rho_x$ ist.

**Revendications**

1. Composition polymère conductrice
(1) qui présente un comportement CPT;
(2) qui comprend
(a) un constituant polymère qui comprend un mélange d'un premier polymère fluoré cristallin ayant un premier point de fusion, $T_1$, et d'un second polymère fluoré cristallin ayant un second point de fusion, $T_2$, qui est d'au moins 160°C et d'au moins $(T_1+25)°C$, avantageusement d'au moins $(T_1+70)°C$, et
(b) un constituant de charge en particules qui a été dispersé dans ledit constituant polymère et qui comprend une charge conductrice; et
(3) qui, après avoir été soumise à un traitement thermique dans lequel la composition est maintenue à une température de 150°C pendant 1000 heures, présente une résistivité, à 25°C, $\rho_o$, qui est inférieure à $2 \times \rho_o$, où $\rho_o$ est la résistivité de la composition à 25°C. avant ledit traitement thermique.

2. Composition selon la revendication 1, dans laquelle lesdits premier et second polymères cristallins constituent au moins 75% en poids du constituant polymère, le rapport en poids du premier polymère au second polymère est de 1:3 à 3:1 et la charge conductrice est constituée essentiellement de noir de carbone.

3. Composition selon la revendication 1 ou 2, dans laquelle $T_2$ est d'au moins 200°C, et $T_1$ est de 100°C à 175°C.

4. Composition selon la revendication 1, 2 ou 3, dans laquelle le premier polymère cristallin fluoré est du fluorure de polyvinylidène, et le second polymère cristallin fluoré est un copolymère éthylène/tétrafluoréthylène.

5. Dispositif électrique qui comprend un élément CPT composé d'une composition polymère à conduction CPT selon l'une quelconque des revendications 1 à 4, et de deux électrodes qui peuvent être connectées à une source d'énergie électrique et qui, lorsqu'elles sont ainsi connectées, font circuler un courant à travers l'élément CPT.

6. Dispositif selon la revendication 5, qui est un ruban chauffant électrique auto-limiteur flexible et dans lequel la composition de polymère à conduction CPT présente une résistivité, à 25°C, de $10^2$ à $10^5$ ohms.cm et comprend
(i) 50 à 80%, en poids de la composition, d'un constituant polymère qui comprend un mélange d'un premier polymère fluoré cristallin ayant un premier point de fusion, $T_1$, qui est de 100°C à 175°C, et d'un second polymère fluoré cristallin ayant un second point de fusion, $T_2$, qui est d'au moins 200°C, le rapport en poids dudit premier polymère audit second polymère étant de 0,5:1 à 1:1, et
(ii) un constituant de charge en particules qui a été dispersé dans ledit constituant polymère et qui comprend du noir de carbone en quantité de 8 à 40% en poids de la composition.

7. Procédé de production d'un dispositif électrique selon la revendication 5 ou 6, qui consiste à recuire le dispositif à une température $T_A$ qui est comprise entre $(T_1+5)°C$ et $(T_2-10)°C$, pendant un temps qui est suffisant pour réduire la résistivité, à 25°C, de la composition CPT d'une première valeur $\rho_x$ avant ledit recuit à une seconde valeur $\rho_o$ après ledit recuit, $\rho_o$ étant inférieure à $0,8 \times \rho_x$.

8. Dispositif électrique selon la revendication 5 ou 6, qui comprend en outre une couche d'une seconde composition polymérique ayant une flexibilité sensiblement plus grande, à 25°C, que celle de ladite composition CPT, ladite couche (1) étant adjacent audit élément CPT et (2) étant soudée par fusion audit élément CPT.

9. Dispositif électrique selon la revendication 8, dans lequel la seconde composition polymérique comprend un constituant polymérique qui est formé essentiellement d'au moins un polymère ayant un point de fusion de $(T_1-10)°C$ à $(T_1+50)°C$.

10. Procédé de production d'un dispositif électrique selon la revendication 8 ou 9, qui consiste (1) à extruder à l'état fondu la seconde composition polymérique en contact avec ledit élément CPT, et (2) à chauffer le dispositif pour effectuer le soudage par fusion de l'élément CPT à la couche, l'élément CPT étant avantageusement chauffé à une température comprise entre $(T_1+5)°C$ et $(T_2-40)°C$ pendant un temps qui est suffisant pour réduire la résistivité, à 25°C, de la composition CPT d'une première valeur $\rho_x$ avant ledit recuit et une seconde valeur $\rho_o$ après ledit recuit, $\rho_o$ étant inférieure à $0,8 \times \rho_x$.

Fig .1.

Fig .2.